(19) Europäisches Patentamt
European Patent Office
Office européen des brevets

(11) **EP 2 233 919 B1**

(12) **FASCICULE DE BREVET EUROPEEN**

(45) Date de publication et mention
de la délivrance du brevet:
**04.07.2012 Bulletin 2012/27**

(51) Int Cl.:
***G01N 27/12*** *(2006.01)*

(21) Numéro de dépôt: **10290155.0**

(22) Date de dépôt: **23.03.2010**

(54) **Micro-dispositif de détection in situ de particules d'intérêt dans un milieu fluide, et procédé de mise en oeuvre**

Mikrovorrichtung zum In-Situ-Nachweis von bestimmten Partikeln in einem flüssigen Medium, und Verfahren zu dessen Ausführung

Micro-device for in situ detection of particles of interest in a fluid medium and method for implementing the same

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **26.03.2009 FR 0901428**

(43) Date de publication de la demande:
**29.09.2010 Bulletin 2010/39**

(73) Titulaire: **Commissariat à l'Énergie Atomique et aux Énergies Alternatives
75015 Paris (FR)**

(72) Inventeurs:
• **Agache, Vincent
38950 St Martin le Vinoux (FR)**
• **Delapierre, Guillaume
38450 Vif (FR)**

(74) Mandataire: **Rataboul, Xavier et al
Cabinet Orès
36, rue de St Pétersbourg
75008 Paris (FR)**

(56) Documents cités:
**WO-A2-2008/035273      WO-A2-2008/070058
US-A1- 2003 033 876**

• **OILIER E ET AL: "Lateral MOSFET transistor with movable gate for NEMS devices compatible with â In-ICâ integration" NANO/MICRO ENGINEERED AND MOLECULAR SYSTEMS, 2008. NEMS 2008. 3RD IEEE INTERNATIONAL CONFERENCE ON, IEEE, PISCATAWAY, NJ, USA, 6 janvier 2008 (2008-01-06), pages 764-769, XP031263543 ISBN: 978-1-4244-1907-4**
• **ERNST T ET AL: "Novel Si-based nanowire devices: Will they serve ultimate MOSFETs scaling or ultimate hybrid integration?" IEEE INTERNATIONAL ELECTRON DEVICES MEETING, IEDM 2008, 15-17 DEC. 2008, SAN FRANCISCO, CO, USA, IEEE, PISCATAWAY, NJ, USA, 15 décembre 2008 (2008-12-15), pages 1-4, XP031434559 ISBN: 978-1-4244-2377-4**

EP 2 233 919 B1

**Description**

L'invention se rapporte à un micro-dispositif de détection *in situ* de particules d'intérêt, telles que des espèces chimiques ou biologiques, dans un milieu fluide, et à un procédé de mise en oeuvre.

La détection de particules chimiques ou biologiques (séquence de nucléotides, protéines, cellules...) nécessite une grande spécificité de la reconnaissance et une sensibilité optimale du capteur.

Les moyens de détection existants sont les microbalances à quartz ou QCM en anglais, de résolution égale à 1 ng/cm$^2$ (nanogramme par centimètre carré), la résonance plasmonique de surface ou SPR, de résolution égale à 0,05 ng/cm$^2$, ou la fluorescence.

D'autres dispositifs ont été développés. Certains utilisent la détection gravimétrique, c'est-à-dire le déplacement de la fréquence de résonance lorsqu'une particule est déposée sur le capteur, et d'autres utilisent la détection par effet de champ, c'est-à-dire la modification des propriétés semi-conductrices d'un capteur de type CMOS lorsqu'une particule chargée électriquement est déposée sur le capteur (V. Agache et al., « 1.1 GHz silicon blade nano-electromechanical resonator featuring 20 nm gap lateral transducers »).

Parmi ceux qui utilisent la détection gravimétrique, on peut citer le capteur de masse développé par l'équipe du professeur Michaël Roukes. Ce capteur est une poutre bi-encastrée en carbure de silicium (SiC), excitée selon un mode de flexion hors-plan par transduction magnétostatique, avec des champs magnétiques de quelques Tesla.

Ce capteur est doté d'une résolution de l'ordre de 7zg (correspondant au poids d'une molécule de 4kDa ; i.e. un peu moins de 7 paires de nucléotides), et présente une sensibilité massique de l'ordre de 0.96 Hz/zg. Néanmoins, ces résultats ont été obtenus pour peser 30 atomes de Xenon déposés sous vide élevé (10$^{-10}$ Torr), à T=4.2°K, à la surface des oscillateurs. Ces conditions expérimentales rendent difficile l'exploitation de ce système à des fins biologiques, domaine pour lequel il convient plutôt d'actionner le système directement dans le milieu contenant les analytes à détecter.

A ce jour, seuls quelques capteurs électromécaniques permettant de mettre en oeuvre une détection gravimétrique opèrent en milieu liquide.

Ces capteurs ont un mode de vibration hors-plan qui implique le déplacement d'un volume important de liquide, ce qui dégrade le coefficient de qualité des capteurs. En outre, ils utilisent le plus souvent un moyen de détection externe au dispositif de détection, ce qui s'avère problématique par rapport au bruit généré, et à la réduction de l'encombrement du dispositif de détection.

La plupart des autres solutions proposées ne permettent pas de réaliser le suivi des cinétiques d'interaction en temps réel, c'est-à-dire dans le milieu dans lequel se trouvent les particules à détecter.

En effet, elles reposent plutôt sur la détermination de la masse ajoutée à partir de la mesure de fréquence, avant et après le dépôt des particules à détecter (approche souvent appelée « dip and dry »). Dans ce cas, des marqueurs sont souvent utilisés afin de corréler le glissement de fréquence mesuré avec la quantité de masse greffée, par simple comptage (par MEB, ou AFM) des nanoparticules présentes à la surface du résonateur.

Une autre démarche consiste à intégrer le liquide d'intérêt au sein même du capteur. Selon ce principe, une équipe de chercheurs du MIT (Scott Manalis *et al.*) a fabriqué un levier muni d'une veine fluidique interne dans laquelle circule le liquide comportant les particules à détecter. Le levier est mis en vibration par couplage électrostatique à 220kHz sous vide, alors que le liquide circule, à débit constant, dans la veine fluidique.

L'inconvénient de ce système réside dans la méthode de détection employée (détection optique à l'aide d'un laser et d'une photodiode 4 quadrants externe) qui contribue à l'encombrement global du système, ainsi que dans la complexité du procédé de fabrication de ces dispositifs.

En conclusion, aucune des approches proposées à ce jour, en matière de détection gravimétrique à base d'oscillateur MEMS/NEMS, ne permet de réaliser un dispositif de détection réduit et portable (c'est-à-dire comprenant des moyens de mesure intégrés avec le capteur sur la même puce) permettant une détection en milieu liquide, en temps réel.

Il existe, par ailleurs, des dispositifs qui utilisent la détection de particules par effet de champ. Leur utilisation en milieu liquide est connue depuis le début des années 70.

De nombreux développements technologiques ont permis de réaliser des capteurs CMOS de dimensions nanométriques tels que des nanofils de silicium ou des nanotubes de carbone.

Basés sur le même principe de modification de conductance par les charges, ces dispositifs ont démontré une grande sensibilité dans les applications de détection d'interaction biologique. L'inconvénient de ce genre de dispositif est le fait que le capteur et la molécule à détecter ont des grandeurs comparables (quelques nanomètres à quelques dizaines de nanomètres). L'ajout d'une ou quelques molécules sur le détecteur le perturbe alors fortement. La spécificité est apportée par la molécule sonde greffée à la surface du dispositif. Ceci nécessite donc des outils de lithographie de haute résolution, coûteux, permettant de définir des capteurs de dimensions nanométriques.

Grâce à la croissance CVD, il est aujourd'hui possible de détecter des concentrations de molécules biologiques comparables à celles qu'on peut détecter par des méthodes classiques de fluorescence : quelques femto moles d'ADN, quelques picogrammes par millilitre de protéines ou encore une particule virale unique.

Ces résultats ont aussi été reproduits sur des nanofils de silicium fabriqués par des procédés de gravure silicium après photolithographie. Même si les dimensions des fils obtenus par ces technologies (50 nm à plusieurs centaines de nm) ne sont pas aussi réduites que celles obtenus par croissance CVD (10-30 nm), les résultats expérimentaux de mesure d'interactions biologiques sont néanmoins très bons : la détection de 25 femto moles d'ADN a été démontrée récemment.

De très bons résultats ont aussi été établis sur des nanotubes de carbone ou des tapis de nanotubes de carbone. Cette technologie présente l'avantage de ne pas nécessiter de technologie coûteuse mais de mettre à profit les propriétés nanométriques d'objets en solution. Par exemple, des concentrations d'ADN de l'ordre du pico moles ont ainsi été détectées.

Cependant, seules des particules chargées électriquement peuvent être détectées par les capteurs à détection électrique par effet de champ, de sorte que ces capteurs ne sont pas polyvalents.

Les documents US2003/033876 et XP031263543 décrivent des micro dispositifs de détection de particules d'intérêt. Cependant, ils ne permettent pas la détection à la fois de la masse et de la charge des particules.

L'objectif de la présente invention est de proposer un dispositif de détection économique, polyvalent, portable, c'est-à-dire présentant un encombrement limité, permettant, à l'aide d'un seul nanofil, une détection *in situ* directe et sans marquage, de la masse et de la charge des particules biologiques ou chimiques du fluide, fixées sur le nanofil, permettant une analyse rapide, et ayant une spécificité et une sensibilité au moins équivalentes aux dispositifs existants.

Plus particulièrement, la présente invention propose un dispositif de détection à base de nanofils semi-conducteurs résonants, pour la reconnaissance spécifique de particules d'intérêt non marquées, permettant d'utiliser de manière combinée ou de manière séparée, l'une ou l'autre des méthodes de détection directe pré-citées, à savoir la détection gravimétrique et la détection électrique.

A cette fin, l'invention a pour objet un micro-dispositif de détection *in situ* d'espèces chimiques ou biologiques dans un milieu fluide, caractérisé en ce qu'il comprend :

i) un nanofil, destiné à interagir avec les particules d'intérêt, présentant une longueur et une largeur, ledit nanofil étant suspendu entre deux ancrages et présentant une fréquence de résonnance mécanique, les ancrages définissent une source et un drain, la source étant reliée à un premier générateur de tension alternative d'une première fréquence angulaire, et le drain étant relié à un générateur de tension continue, pour générer un premier signal d'entrée ;

ii) une première électrode, dite électrode d'excitation, disposée latéralement et en regard du nanofil, et étant reliée à un deuxième générateur de tension alternative d'une deuxième fréquence angulaire, pour générer un deuxième signal d'entrée ; et

iii) une deuxième électrode, dite électrode de mesure, disposée latéralement et en regard du nanofil, à l'opposé de l'électrode d'excitation par rapport au nanofil, et générant un unique signal de sortie, représentatif des particules d'intérêt.

Selon d'autres modes de réalisation :

- la longueur du nanofil peut être comprise entre 0,5 $\mu$m et 10 $\mu$m, de préférence entre 2,38 $\mu$m et 4,25 $\mu$m ;
- la largeur du nanofil peut être comprise entre 0,02 $\mu$m et 1 $\mu$m, de préférence comprise entre 0,15 $\mu$m et 0,27 $\mu$m ;
- le nanofil peut présenter un rapport longueur sur largeur supérieur à 10, de préférence compris entre 10 et 100 ;
- le nanofil peut être recouvert, en partie ou en totalité, par des éléments de reconnaissance moléculaire complémentaires des particules d'intérêt à détecter ;
- le micro-dispositif de détection peut comprendre un amplificateur synchrone ;
- le nanofil peut présenter une épaisseur comprise entre 50 nm et 200 nm ; et/ou
- le nanofil peut être recouvert d'une couche d'un matériau diélectrique isolant de permittivité comprise entre 2 et 20.

L'invention a également pour objet un procédé de mise en oeuvre du dispositif précédent, comprenant les étapes suivantes :

- alimenter la source avec une première tension alternative, dite tension de porteuse, ayant une première fréquence angulaire, différente de la fréquence de résonnance mécanique du nanofil ;
- alimenter le drain avec une tension continue ;
- alimenter l'électrode d'excitation, avec une deuxième tension alternative, dite tension de commande, ayant une deuxième fréquence angulaire, égale à la somme de la première fréquence angulaire, et de la fréquence de résonnance mécanique du nanofil ;
- déposer au moins une particule d'intérêt sur le nanofil ;

- détecter un courant sortant par l'électrode de mesure.

Selon un mode de réalisation préféré, l'alimentation en première tension alternative peut être réalisée avec un amplificateur synchrone.

Selon un mode de réalisation préféré, le procédé comprend une détection d'une composante fréquentielle du courant source-drain.

Ainsi, l'invention permet de combiner, sur le même nanofil, une détection gravimétrique à une détection électrique par effet de champ, permettant une estimation de la masse et de la charge des particules biologiques ou chimiques déposées. Cette invention présente un intérêt particulier dans le cas de particules chargées (espèces biologiques par exemple), la détection peut être assurée selon les deux méthodes avec le même nanofil. Dans le cas de particules neutres, seule la détection gravimétrique sera utilisée.

D'autres caractéristiques de l'invention seront énoncées dans la description détaillée ci-après faite en référence aux figures qui représentent, respectivement :

- la figure 1, une vue schématique de dessus d'un micro-dispositif de détection selon la présente invention ;
- la figure 2, une vue schématique en perspective d'un micro-dispositif de détection selon la présente invention relié électriquement à des sources de tension électrique et à un appareil de mesure électrique ;
- les figures 3 à 14, des vues schématiques d'un exemple de procédé de fabrication d'un micro-dispositif selon l'invention à partir d'un substrat SOI ; et
- les figures 15 et 16, deux modes de réalisation d'un micro-dispositif de détection selon la présente invention permettant une mise en vibration du nanofil dans son plan, selon une harmonique et non selon son mode fondamental.

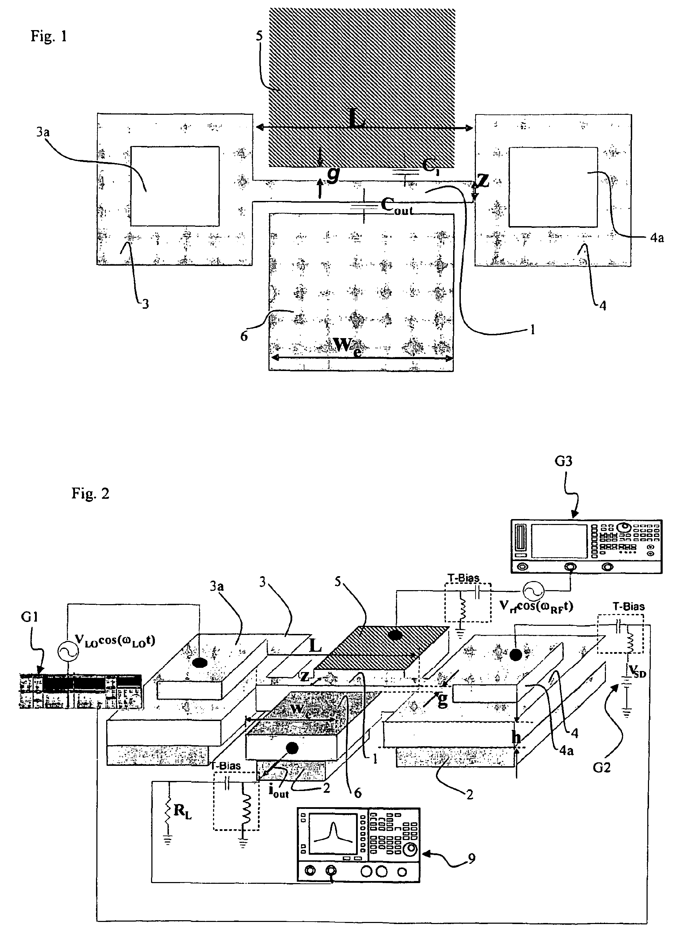

Le micro-dispositif de détection, illustré aux figures 1 et 2, comprend un nanofil 1, en matériau semi-conducteur, suspendu au dessus d'un substrat 2, par l'intermédiaire de deux ancrages 3 - 4 à ses extrémités. Ce nanofil a une épaisseur h, une largeur Z, et une longueur L. Sur les ancrages, de part et d'autre du nanofil, sont disposés des plots de contact ohmique 3a - 4a servant de zone de Source et de Drain.

La source est reliée à un premier générateur G1 de tension alternative $v_{LO}$, d'une première fréquence angulaire $\omega_{LO}$. Le drain 4a est relié à un générateur G2 de tension continue $V_{SD}$. Ces deux générateurs génèrent un premier signal d'entrée pour la détection électrique par effet de champ.

De cette manière, à chute de potentiel de source-drain donnée, on mesure le courant circulant à travers le nanofil et plus particulièrement ses variations induites, par effet de champ, par la présence de particules d'intérêt déposées à la surface du nanofil, lorsque ces dernières sont chargées.

Un autre moyen de détection que permet ce dispositif, consiste à traduire le dépôt de particules d'intérêt à la surface du nanofil 1 par le changement de fréquence de résonance $\omega_0$ du nanofil 1.

Pour ce faire, une ou plusieurs électrodes latérales 5 sont disposées latéralement et en regard du nanofil 1, et séparées du nanofil 1 par un entrefer g. Cette ou ces électrodes 5 présente(nt) une largeur totale We et permet(tent) de mettre en résonance le nanofil, sur l'un de ses modes propres de résonnance, par couplage électrostatique. Le dispositif présente ainsi une surface de transduction A, telle que A=We*h.

La ou les électrode(s) d'excitation 5, est (sont) reliée(s) à un deuxième générateur G3 de tension alternative $v_{RF}$, d'une deuxième fréquence angulaire $\omega_{RF}$. Ce deuxième générateur G3 génère un deuxième signal d'entrée pour la détection gravimétrique.

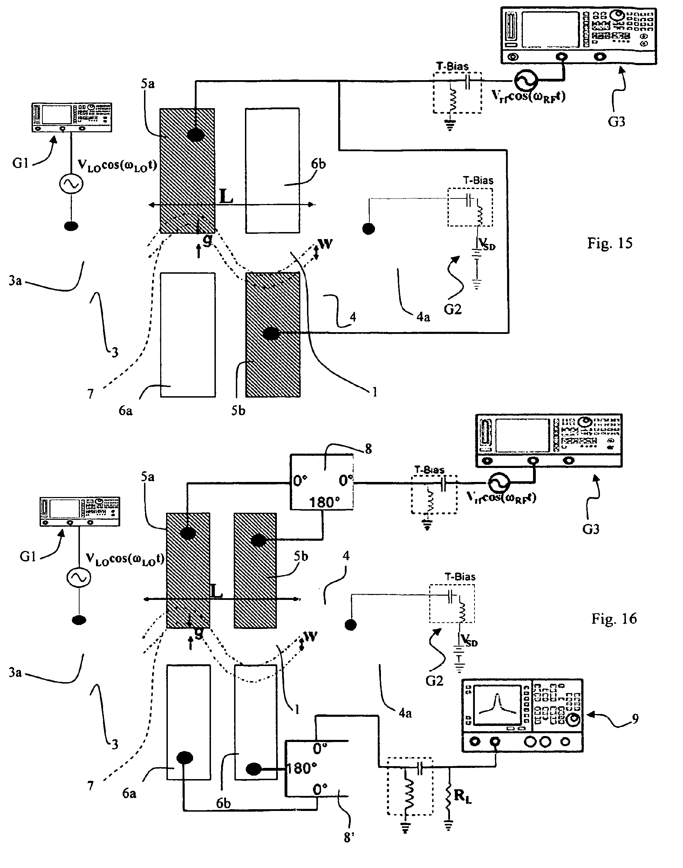

Lorsque l'on souhaite exciter le nanofil, non pas dans son mode de résonance fondamental, mais selon l'une de ses harmoniques, les électrodes d'excitation 5 peuvent être disposées d'un même côté, ou de part et d'autre, du nanofil. Leur nombre et leur position sont ajustés en fonction du nombre de ventres (amplitude maximale) de vibrations de l'harmonique (voir figures 15 et 16). Par exemple, pour la première harmonique, on privilégiera l'intégration de deux électrodes latérales 5 pour l'excitation. Il en va de même des électrodes de mesure 6 pour la détection par couplage capacitif. On précise que l'excitation du nanofil selon une de ses fréquences harmoniques permet d'aboutir à une limite de détection meilleure que celle obtenue selon le mode de résonance fondamental.

Des sollicitations permettant d'obtenir des vibrations dans le plan seront préférentiellement choisies. Des vibrations hors-plan pourront également être générées mais avec une efficacité de transduction plus faible.

Les amplitudes de vibration génèrent alors une modulation de la capacité entre le nanofil 1 et au moins une électrode de mesure 6, et donne lieu à l'apparition d'un courant dit « motionel » qui présente des maxima au niveau des modes propres dudit nanofil. Lorsque plusieurs électrodes de mesure sont utilisés, le signal de sortie est égal à une combinaison des signaux de ces électrodes de mesure. Cette combinaison peut comprendre une addition ou une soustraction de signaux. Lorsque plusieurs électrodes mesurent des vibrations en phase, la combinaison est une addition. Par contre, lorsque deux électrodes mesurent des vibrations en opposition de phase, on soustrait les signaux respectifs délivrés par ces deux électrodes.

Ainsi, l'électrode de mesure 6 (ou l'ensemble des électrodes 6), disposée latéralement et en regard du nanofil

1, à l'opposé de l'électrode d'excitation 5 (ou des électrodes d'excitation) par rapport au nanofil 1, génère un unique signal de sortie, représentatif des particules d'intérêt, à partir du premier signal d'entrée pour la détection électrique et du deuxième signal d'entrée pour la détection gravimétrique. Ce signal $I_{out}$, capté par un analyseur de spectre 9, est représentatif de la masse des particules d'intérêt ayant adhéré à la surface du nanofil.

Les variations du courant circulant à travers le nanofil, sous l'effet de la présence de particules d'intérêt ayant adhéré à la surface du nanofil, permettent la mesure de la charge totale de ces particules. En effet, l'analyse de la composante fréquentielle, à la première fréquence angulaire $w_{LO}$, du courant source drain, permet de déterminer la charge des molécules greffées ou déposées sur le nanofil. Cette détection peut être réalisée par un amplificateur synchrone Lock In. Elle comprend par exemple une mesure de l'amplitude de ce courant, dit courant source-drain, à la première fréquence angulaire $w_{LO}$, cette amplitude dépendant alors de la charge totale collectée sur le nanofil.

Ainsi, avec le même dispositif, il est possible de déterminer la masse et la charge des particules ayant adhéré au nanofil.

Le signal détecté en sortie résulte de la combinaison des courants issus de deux sources différentes de transduction, optimisant la sensibilité à la détection du biocapteur : le courant motionel, lié à la variation de fréquence de résonance du nanofil (mesure par couplage capacitif par exemple), et le courant issu du changement de conductance du nanofil d'autre part.

Le premier mécanisme de transduction repose sur la détection de la variation de masse et/ou de raideur mécanique du nanofil à travers le glissement de sa fréquence de résonance induit par le dépôt de particules d'intérêt à sa surface.

Le deuxième mécanisme de transduction repose sur la détection électrique par effet de champ, et plus particulièrement sur la modification de l'environnement électrostatique du nanofil semi-conducteur, par le biais d'une réaction chimique ou d'une reconnaissance biologique à sa surface, modulant par conséquent le courant circulant en son sein. Ce mécanisme, sans marquage des particules d'intérêt, est particulièrement intéressant car il présente une sensibilité de quelques picogrammes par millilitre (pg / mL) sur des sérums non dilués, permettant notamment de simplifier les étapes de préparation de l'échantillon.

Cette combinaison des méthodes de détection gravimétrique et de détection électrique par effet de champ conjugue de nombreux atouts :

- une absence de marquage, ce qui simplifie les protocoles, et diminue le temps d'analyse et les coûts
- une sensibilité très élevée
- une intégration possible car ce mode de détection ne nécessite pas de système de lecture volumineux et on peut envisager une architecture de type CMOS.

Selon l'invention, par l'intermédiaire d'un traitement de signal adapté, il est possible d'extraire le signal utile du bruit capacitif direct (couplage électrode d'entrée et de sortie) tout en caractérisant, dans le même temps, le courant de source drain qui renseigne également sur le dépôt de particules d'intérêt, lorsque ces dernières sont chargées.

Plus particulièrement, le procédé selon l'invention consiste à adapter l'un des signaux d'entrée en fonction de l'autre signal d'entrée, pour obtenir un signal de sortie qui permet d'exploiter aisément les informations correspondant à chacune des méthodes de détection utilisées. Il est ainsi possible d'obtenir un premier signal de sortie, représentatif de la masse des particules d'intérêt liées au nanofil, et d'obtenir également un second signal de sortie représentatif de la charge totale de ces particules d'intérêt, les deux signaux de sortie étant simultanément obtenu à l'aide du même nanofil, et utilisant un signal d'entrée commun.

Comme illustré en figure 2, le micro-dispositif de détection selon l'invention est mis en oeuvre, de préférence, en alimentant la source 3a avec une première tension alternative $v_{LO}$, dite tension de porteuse, à partir d'un premier générateur G1 de tension alternative. Celle-ci présente une première fréquence angulaire $\omega_{LO}$, différente de la fréquence de résonnance mécanique $\omega_0$ du nanofil 1 que l'on souhaite exploiter. Cette tension de porteuse est générée, soit par un amplificateur synchrone « Lock-in », soit par un générateur de signaux standard.

Le drain 4a est alimenté avec une tension continue $V_{SD}$ à partir d'un générateur G2 de tension continue. Ce signal est superposé à la porteuse de fréquence angulaire $\omega_{LO}$.

L'électrode d'excitation 5 est alimentée avec une deuxième tension alternative $v_{RF}$, dite tension de commande, à partir d'un deuxième générateur G3 de tension alternative. La tension alternative $v_{RF}$ présente une deuxième fréquence angulaire $\omega_{RF}$, égale à la somme de la première fréquence angulaire $\omega_{LO}$, et de la fréquence de résonnance mécanique $\omega_0$ du nanofil.

Bien qu'aucun des signaux appliqués n'ait une fréquence identique à la fréquence de résonance mécanique $\omega_0$ du nanofil, on peut faire en sorte qu'une résultante des forces $F_{mix}$ issues du couplage capacitif se situe à cette fréquence $\omega_0$ en mettant à profit les non-linéarités quadratiques immanantes à la transduction par couplage capacitif. Ainsi, la force totale $F_i$ issue du couplage électrostatique s'écrit :

$$F_i = \frac{1}{2}\left(V_{SD} + \upsilon_{LO} - \upsilon_{RF}\right)^2\left(\frac{\partial C_i}{\partial x}\right) \qquad \text{Équation 1}$$

Où $C_i\,(C_i = \varepsilon_0\varepsilon_r Lh/g)$ désigne la capacité de transduction entre le nanofil 1 et l'électrode 5 à laquelle est appliqué le signal $\upsilon_{RF}$ de fréquence angulaire $\omega_{RF} = \omega_0 + \omega_{LO}$, et x le déplacement latéral du nanofil 1 par rapport à son axe neutre dans le sens des vibrations. $\varepsilon_0$ et $\varepsilon_r$ désignent respectivement la permittivité du vide et la permittivité relative du nanofil.

En décomposant cette expression, on obtient :

$$F_i = \frac{1}{2}V_{SD}^2\left(\frac{\partial C_i}{\partial x}\right) + \frac{1}{2}\upsilon_{LO}^2\left(\frac{\partial C_i}{\partial x}\right) + \frac{1}{2}\upsilon_{RF}^2\left(\frac{\partial C_i}{\partial x}\right) + V_{SD}\upsilon_{LO}\left(\frac{\partial C_i}{\partial x}\right) - V_{SD}\upsilon_{RF}\left(\frac{\partial C_i}{\partial x}\right) - \upsilon_{LO}\upsilon_{RF}\left(\frac{\partial C_i}{\partial x}\right)$$

et le dernier terme de $F_i$ correspond à la résultante des forces $F_{mix}$ qui est recherchée :

$$F_{mix} = -\upsilon_{LO}\upsilon_{RF}\left(\frac{\partial C_i}{\partial x}\right) = -\frac{1}{2}V_{LO}V_{RF}\left(\frac{\partial C_i}{\partial x}\right)\cos\left(\omega_{RF} - \omega_{LO}\right)t$$

où $\upsilon_{LO} = V_{LO}\cos(\omega_{LO})t$ et $\upsilon_{RF} = V_{RF}\cos(\omega_{RF})t$

Le terme $F_{mix}$ issu de la modulation de la tension de porteuse par le signal de commande $\upsilon_{RF}$ se situe alors à la pulsation $\omega_{RF}$-$\omega_{LO}$ qui est ajustée, de sorte à être accordée à la fréquence de résonance mécanique $\omega_0$ du nanofil.

Ensuite, le micro-dispositif de détection selon l'invention est mis en oeuvre en déposant au moins une particule d'intérêt sur le nanofil et en détectant le courant $I_{out}$ sortant par l'électrode de mesure 6.

Ainsi, à la pulsation $\omega_0$ (i.e. au mode propre de résonance du nanofil 1 qui est exploité), on récupère un courant motionel dont l'amplitude est établie par l'intermédiaire de la relation suivante :

$$I_{out} = \omega_0 V_{SD}\left(\frac{\partial C_{out}}{\partial x}\right)\frac{Q}{k_{eff}}F_{mix}, \qquad \text{Équation 2}$$

où Q désigne le coefficient de qualité du nanofil à la pulsation $\omega_0 = \omega_{RF}$-$\omega_{LO}$, $C_{out}$ la capacité de transduction entre le nanofil 1 et l'électrode de mesure 6.

$C_{out}$ et $k_{eff}$ sont respectivement la capacité de transduction du nanofil à la pulsation $\omega_0$ et la raideur effective du nanofil de longueur L et de hauteur h, avec

$$Cout = \varepsilon\varepsilon_0\frac{Lh}{g'}$$

g' étant la distance séparant la nanofil de l'électrode de détection (en général g' = g)

$$\text{et } k_{eff} = 32\,Ew^3h/L^3$$

E = module d'Young, w = épaisseur nanofil,

Q correspond au coefficient de qualité du nanofil, pouvant être déterminé par essais et modélisations. Ce coefficient détermine la proportion d'énergie absorbée par l'oscillateur à une fréquence donnée. Il traduit également la finesse d'un pic de résonance.

Si l'on se place dans l'approximation d'un oscillateur harmonique, le facteur de qualité d'un tel oscillateur est donnée par

$$Q = \frac{w_0}{\Delta f_{-3dB}}$$

$\Delta f_{-3dB}$ représente la largeur à mi-hauteur du graphique représentant l'amplitude de la résonnance en fonction de la fréquence d'oscillation du nanofil.

L'avantage de ce mode de réalisation préféré réside dans le fait que le signal de sortie $I_{out}$ est décalé en fréquence par rapport à la tension de commande, appliquée sur l'électrode d'excitation 5, et à la tension de porteuse, appliquée à la source 3a.

Cela évite que le couplage capacitif direct se superpose au signal d'intérêt en sortie et masque, éventuellement, le courant motionel issu de la résonance mécanique du nanofil.

D'autre part, la tension de porteuse de fréquence angulaire $\omega_{LO}$ est mise à profit pour réaliser, par le biais d'un amplificateur Lock-In, une détection synchrone sur le courant de source-drain (effet transistor), comme précédemment décrit.

Grâce à l'utilisation de tensions alternatives de fréquences différentes et déterminées, il est ainsi possible de combiner une détection gravimétrique avec une détection électrique par effet de champ, couplées et co-intégrées sur le même dispositif, sans risque de mélange des différents signaux. Par le biais du traitement du signal décrit précédemment, le courant d'intérêt issu de la détection gravimétrique n'est pas masqué par le courant capacitif direct, et on en détecte une composar te fréquentielle déterminée en fonction de celle à laquelle on réalise une détection synchrone du courant de source-drain (effet transistor).

En outre, le dispositif selon l'invention permet une intégration de la mesure pour les deux modes de détection dans le dispositif lui-même. Par ailleurs, le dispositif présente un encombrement réduit puisqu'il suffit d'une seule électrode de mesure pour la mise en oeuvre simultanée des deux méthodes de détection.

Les inventeurs ont trouvé que, de façon surprenante, en combinant le procédé de détection précédemment décrit, pour mettre en oeuvre les deux types de détection, avec certaines dimensions de nanofil, on obtient une sensibilité de détection particulièrement faible, de l'ordre du zeptogramme, voire moins. Par exemple, pour des nanofils de 4,25 $\mu$m de long et, respectivement, de 0,09 $\mu$m, 0,15 $\mu$m et 0,27 $\mu$m de large, on obtient une résolution massique, ou masse minimum détectable de l'ordre du zeptograme, voire moins. Pour un nanofil de 0.5 $\mu$m de long et de 30 nm de large, on obtient une résolution massique de $5.51.10^{-3}$ zg et un coefficient de transconductance (que l'on définit par le ratio Z/L) de $60\ 10^{-3}$. Avec ces dernières dimensions, on obtient un nanofil de résolution presque dix fois supérieure à celle d'un nanofil de 2,38 $\mu$m de long et de 0,15 $\mu$m de large, à coefficients de qualités identiques.

Ainsi, le micro-dispositif de détection selon l'invention présente, de préférence, un nanofil dont la longueur L est comprise entre 0,5 $\mu$m et 10 $\mu$m, de préférence entre 2,38 $\mu$m et 4,25 $\mu$m et dont la largeur Z est comprise entre 0,02 $\mu$m et 0,27 $\mu$m, de préférence comprise entre 0,15 $\mu$m et 0,27 $\mu$m. On considère que la couche active du substrat SOI (Silicium sur isolant) dans lequel le nanofil est défini (voir le procédé de fabrication décrit plus loin) est extrêmement fine, *i.e.* de l'ordre de quelques nanomètres à quelques dizaines de nanomètres.

Selon l'invention, le nanofil présente un rapport $\alpha_{gm}$ (coefficient de transconductance) égal à la largeur Z divisée par la longueur L, avantageusement compris entre $10.10^{-3}$ et $100.10^{-3}$ de préférence entre $15.10^{-3}$ et $70.10^{-3}$.

Selon l'invention, le nanofil présente un rapport longueur L sur sur largeur Z supérieur à 10, avantageusement compris entre 10 et 100.

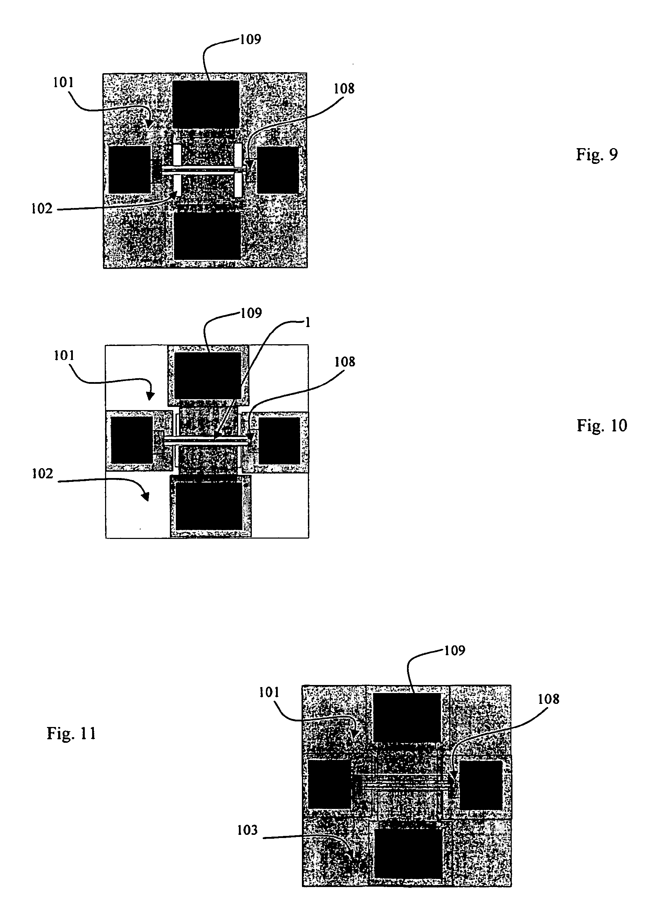

Selon l'invention, ce rapport est déterminé au regard des contraintes de fabrication. En dessous d'un rapport longueur L sur largeur Z de 10 , une rigidité accrue des nanofils ne permet d'envisager l'exploitation de modes en flexion latérale sans phénomènes de non-linéarités mécaniques importants. Mais lorsque ce rapport est supérieur à 100, la longueur est trop élevée, et, lors de la fabrication du micro-dispositif selon l'invention, un phénomène dit « de stiction » peut apparaitre lors de la libération du nanofil (voir la description relative à la figure 11).

On déterminera ce rapport précisément afin qu'à tension de grille $V_g$ donnée (c'est-à-dire la charge apportée par les particules d'intérêt déposées à la surface du nanofil 1), le courant de drain lié à la détection biologique soit maximal.

La largeur Z du nanofil sera supérieure à 20 nm, et inférieure à 1$\mu$m.

La surface du nanofil est, de préférence, recouverte (en partie ou en totalité) par des éléments de reconnaissance complémentaires des particules d'intérêt à détecter, de sorte à favoriser la détection des particules d'intérêt et réduire au maximum l'adsorption non spécifique, c'est-à-dire le dépôt de particules que l'on ne souhaite pas détecter. Par exemple, les éléments de reconnaissance sont des molécules chimiques ou biologiques, des anticorps, des sondes d'acides nucléiques ou des polymères imprimés.

Les éléments de reconnaissance sont immobilisés sur des surfaces semiconductrices du nanofil, recouvertes ou non d'un diélectrique. Le semi-conducteur peut être, par exemple, du silicium, du germanium. Le diélectrique peut être, par exemple, un oxyde conducteur ou semi-conducteur ($SiO_2$) ou encore un nitrure conducteur ou semi-conducteur ($Si_3N_4$).

Les éléments de reconnaissance peuvent être greffés sur la surface sous la forme d'une monocouche (quelques ångström d'épaisseur), d'une fine couche composée de quelques monocouches (de 1 à 10 nm d'épaisseur), ou encore d'une couche épaisse d'éléments de reconnaissance, seuls ou encapsulés dans une matrice, par exemple de type solgel ou polymère (quelques nm à plusieurs centaines de nm).

Les monocouches permettent de contrôler précisément une quantité donnée d'éléments de reconnaissance tandis que l'encapsulation dans une matrice permet d'augmenter sensiblement cette densité surfacique pour, par exemple, augmenter la sensibilité et/ou la robustesse du système.

L'élément de reconnaissance peut être lié à la surface de manière covalente ou être simplement adsorbé. Généralement, la liaison covalente est préférée car plus robuste. Dans le cas des couches épaisses, une simple adsorption peut s'avérer suffisante.

On notera également que l'élément de reconnaissance peut être directement relié à la surface ou par l'intermédiaire d'un lien chimique (un « linker ») dont l'intérêt est de faciliter l'accroche de l'élément de reconnaissance et/ou de moduler les propriétés de l'interface organique/inorganique (rigidité, conduction, ...). Si un « linker » est utilisé, il doit contenir une fonction chimique capable de réagir avec l'élément de reconnaissance, soit de manière covalente, soit par simple interaction électrostatique, hydrophobe ou de type Van Der Waals. A titre d'exemple, la liaison covalente entre le « linker » et l'élément de reconnaissance peut être formée par un lien de type C-N, C=N (imine), C-O, amide, ester, triazole (à partir d'une réaction entre un alcyne et un groupement azido).

Suivant le matériau de surface utilisé, l'élément de reconnaissance ou son « linker » comprennent un groupement chimique adapté pour leur permettre de se fixer à la surface.

Sur un matériau diélectrique tel que par exemple $SiO_2$, $Si_3N_4$, $TiO_2$, on pourra utiliser des éléments de reconnaissance ou des « linker » munis par exemple des fonctions :

- silanes ($SiH_3$, $RSiX_3$, $R_2SiX_2$, $R_3SiX$, ...) où R est un groupement carboné et X est un groupement libérable de type halogéno ou alcoxy ;
- phosphates ou phosphonates.

Sur un matériau semi-conducteur tel que le silicium, on pourra par exemple utiliser des fonctions capables de créer des liaisons Si-C ou Si-O. On citera sans être exhaustif les alcènes, alcynes, alcoxy, phénol, diazonium et halogénures.

Suivant le type de couche souhaitée (monocouche, couche fine, couche épaisse), on choisit un mode de réalisation différent.

Les monocouches et couches fines sont, par exemple, réalisées par trempage de la surface dans un solvant contenant la molécule à greffer (élément de reconnaissance ou « linker ») en présence éventuellement d'un ou plusieurs catalyseurs ou encore par la technique de Langmuir Blodgett, s'il s'agit de molécules que l'on peut auto assembler.

Une activation thermique, électrique et/ou photochimique pourra également être utilisée. L'activation électrique pourra se faire de manière externe ou en utilisant les plots source/drain connectant la nanostructure.

Les couches épaisses de types polymères sont, par exemple, réalisées par les méthodes usuelles utilisées dans les procédés solgels : trempage-retrait (« dipping »), tournette (« spin-coating »), enduction laminaire, nébulisation (spraying), etc.

Le capteur peut fonctionner en milieu gazeux (détection d'agents toxiques, infectieux dans l'air par exemple) ou en milieu aqueux (détection de virus, molécules, reconnaissance immunospécifique...). Dans ce dessein, les parties actives en contact avec le liquide seront passivées d'une couche isolante (oxyde de Silicium, diélectriques haute permittivité $HFO_2$, $Al_2O_3$...), afin d'éviter l'apparition de courants de fuite par électrolyse par exemple.

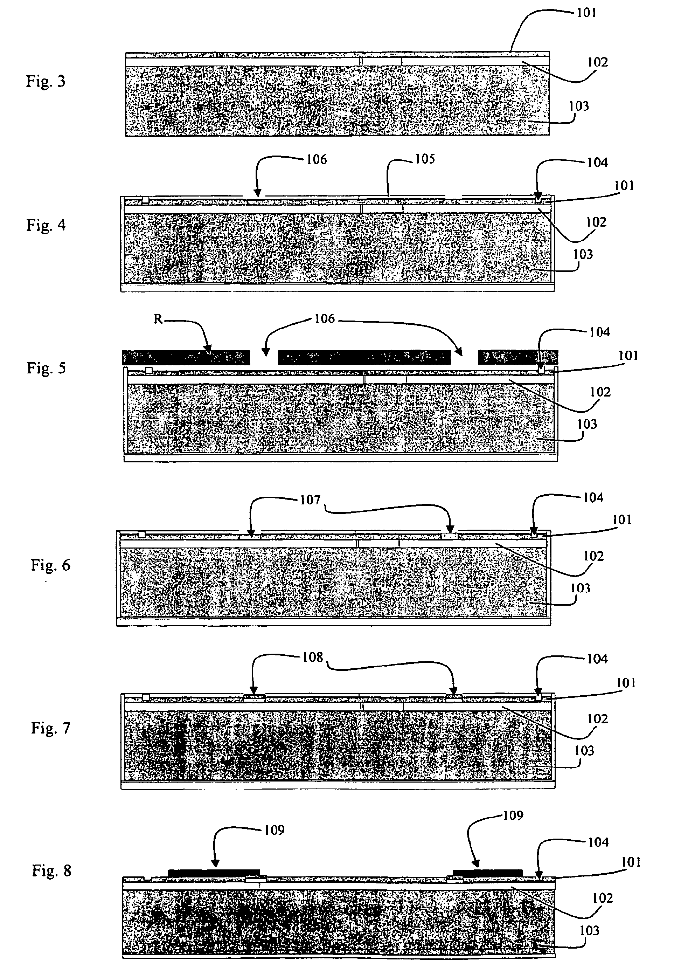

Un exemple de procédé de fabrication du dispositif selon l'invention est décrit ci-après, en référence aux figures 3 à 14.

Le substrat de départ est, préférentiellement, un substrat 100 de type SOI à partir duquel sont fabriquées les parties actives du dispositif, c'est-à-dire le nanofil semi-conducteur autoporté, les électrodes de transduction latérales pour sa mise en vibration et la détection gravimétrique par couplage capacitif, les moyens de support incorporant les zones de source et de drain pour la détection électrique par effet de champ.

Ce substrat SOI 100, illustré en figure 3, comprend une couche supérieure 101 de silicium monocristallin dopé de type P ou N. Cette couche supérieure 101 présente une épaisseur de l'ordre 50 à 200nm. Sous cette couche supérieure, est disposée une couche 102 de $SiO_2$ enterrée d'une épaisseur de l'ordre de 500nm à 3 micromètres préférentiellement. Enfin, une couche inférieure 103 en silicium, de direction cristallographique <100>, est disposée sous la couche de $SiO_2$ enterrée.

Une première étape, illustrée en figure 4, consiste à définir des marques d'alignement 104 par photolithographie et gravure sèche dans la couche supérieure 101 en Silicium. Après le retrait de la résine de protection, on réalise une croissance d'oxyde thermique pour former une couche d'oxyde thermique 105. Puis on réalise une photolithographie, à l'aide d'une résine de protection, pour définir des ouvertures 106 dans la couche 105 d'oxyde thermique.

Dans un mode de réalisation préféré, illustré en figure 5 on conserve de la résine de protection R afin d'implanter localement des dopants à travers les ouvertures 106. Les paramètres d'implantation sont ajustés de sorte que les dopants soient situés en surface de la couche supérieure de silicium monocristallin. Les dopants implantés sont choisis de type P si la couche supérieure de silicium monocristallin est initialement dopée de type N, et inversement de type N si celle-ci est dopée de type P. L'activation électrique des dopants en sites substitutionnels pourra se faire de deux manières différentes :

- On utilise la résine de protection R pour transférer par gravure sèche réactive (RIE) les ouvertures 106 dans la couche d'oxyde thermique 105. La résine est ensuite retirée à l'aide d'une solution chimique adaptée, et le recuit d'activation est alors appliqué ; ou alternativement

- On retire la résine juste après l'étape d'implantation ; le recuit d'activation est alors appliqué, puis une étape de photolithographie est de nouveau opérée de sorte à définir les mêmes ouvertures (ou ouvertures différentes à l'aplomb des zones préalablement implantées) au-dessus de l'oxyde qui est alors gravé (RIE) jusqu'à la couche supérieure de silicium monocristallin. On retire ensuite la résine de protection.

La seconde alternative consiste à définir des zones de contact plus ou moins larges et/ou déportées du nanofil, avec la couche métallique 109 qui sera déposée et gravée ultérieurement.

À ce stade du procédé de fabrication, illustré en figure 6, les ouvertures 106 dans l'oxyde thermique sont définies en surface avant du substrat SOI, débouchant sur des « caissons » 107 de Silicium monocristallin dopés de type P si la couche supérieure du SOI est initialement dopée de type N, et inversement de type N si celle-ci est dopée de type P. Ces caissons 107 incluent les zones de source et de drain du nanofil semi-conducteur, en vue de son fonctionnement en transistor, et éventuellement les accès électriques sur les électrodes de transduction électromécanique.

Puis, comme illustré en figure 7, une couche métallique est revêtue en face avant du substrat SOI, puis un recuit et un retrait sélectif par gravure chimique sont réalisés, de sorte que des contacts ohmiques 108 auto-alignés sont formés, à l'emplacement des ouvertures 106, sur les caissons implantés 107, par siliciuration de Titane, de Nickel ou Platine, dans une version alternative.

Dans un mode de réalisation préféré, la couche 105 d'oxyde thermique est ensuite retirée à l'aide d'une solution chimique à base d'acide fluorhydrique ou alternativement à partir d'une méthode de gravure RIE sélective à l'égard de la siliciuration métallique. On recouvre ensuite la face avant du substrat d'une couche métallique de AlSi, déposée par pulvérisation cathodique à basse température (figure 8). Cette couche métallique peut également être en Or précédée, le cas échéant, d'une couche d'accroche en Chrome, Titane, et ou Nickel.

Dans un mode de réalisation alternatif, la couche 105 d'oxyde thermique est conservée avant le dépôt de l'AlSi. Dans ce cas, la couche d'AlSi devrait être localisée sur les caissons et autour de ceux-ci car la taille des plots 109 est plus large que celle des caissons.

On réalise ensuite une nouvelle étape de photolithographie qui délimite un masque en résine à travers lequel est retirée localement la couche d'AlSi par gravure sèche. Le retrait du masque en résine aboutit à la formation de plots de contact électrique 109 en AlSi (figure 8) pour la polarisation du futur dispositif (source, drain, électrodes de transduction électromécanique). Ces plots 109 se prolongent préférentiellement jusqu'à la périphérie de la puce, c'est-à-dire dans les zones déportées des futures veines fluidiques ou parties en contact avec le liquide contenant les particules d'intérêt à détecter. La figure 9 est une vue de dessus du substrat obtenu à cette étape de la fabrication.

Puis, une nouvelle étape de photolithographie est mise en oeuvre afin de définir des motifs d'alignement pour une étape suivante de lithographie électronique (« ebeam »).

Cette étape de lithographie électronique sert à définir le motif de masquage (résine de polarité positive) du nanofil, ainsi que les motifs adjacents (électrodes latérales, et plots de suspension). Les motifs obtenus sont transférés par gravure sèche dans la couche supérieure d'oxyde de silicium (si toutefois celle-ci a été conservée avant le dépôt d'AlSi, ce qui est le cas pour le mode de réalisation alternatif dont il a été fait mention plus haut), ainsi que dans la couche supérieure de Silicium monocristallin.

Le retrait de la résine électronique est suivi d'une nouvelle étape de photolithographie, employant une résine photosensible épaisse (quelques micromètres d'épaisseur), qui permet de délimiter les tranchées d'isolation entre les électrodes de polarisation du capteur (source, drain, électrodes latérales de transduction électromécanique), et masquer, en même temps, les motifs déjà structurés à l'issue de la lithographie électronique précédente (nanofil et motifs adjacents). Les tranchées sont obtenues par gravure sèche dans la couche supérieure de Silicium monocristallin, puis la résine est retirée à l'aide d'une solution chimique dédiée, suivie d'un plasma à base d'oxygène pour s'assurer du retrait complet des résidus de polymères dans les entrefers, comme illustré, en vue de dessus, à la figure 10.

Le nanofil est ensuite libéré du substrat par gravure de l'oxyde enterré 102 dans une solution chimique à base de BOE (acide fluorhydrique tamponné) ou dans une enceinte saturée en HF en phase vapeur (figure 11). Après retrait de l'oxyde sous le nanofil par l'une ou l'autre de ces chimies d'attaque, l'échantillon est immergé dans l'eau déionisée, puis de l'Isopropanol, pour être finalement séché par étuvage.

Comme évoqué précédemment, le rapport longueur L sur largeur Z est déterminé au regard des contraintes de fabrication. Lorsque ce rapport est supérieur à 100, la longueur du nanofil risque d'entraîner un phénomène dit « de stiction » lors de la libération du nanofil : lors de la gravure de la couche sacrificielle d'oxyde enterré 102, on peut observer un frottement ou une adhérence entre le nanofil et le reste de la couche 101. Autrement dit, les forces capillaires induites par la tension superficielle du liquide de gravure entre le nanofil 1 et le reste de la couche 101, au cours du séchage du liquide de gravure, génèrent le collage ou le frottement du nanofil contre le reste de la couche 101. Séparer les deux surfaces est souvent compliquée en raison de la fragilité du nanofil 1.

Après avoir libéré le nanofil, on dépose, par procédé ALD (Atomic Layer Deposition), une couche 110 d'un oxyde « high-k » (haute permittivité), tel qu'un oxyde de type $Al_2O_3$ ou $HFO_2$, ou plus largement un diélectrique isolant déposé de manière conforme, c'est-à-dire dont l'épaisseur est homogène autour du fil. Il est intéressant d'utiliser un oxyde de haute permittivité par procédé ALD car l'efficacité de transduction entre les électrodes 5 - 6 et le nanofil 1 est d'autant plus importante que la capacité de l'oxyde est grande. De préférence, la permittivité sera comprise entre 2 et 20.

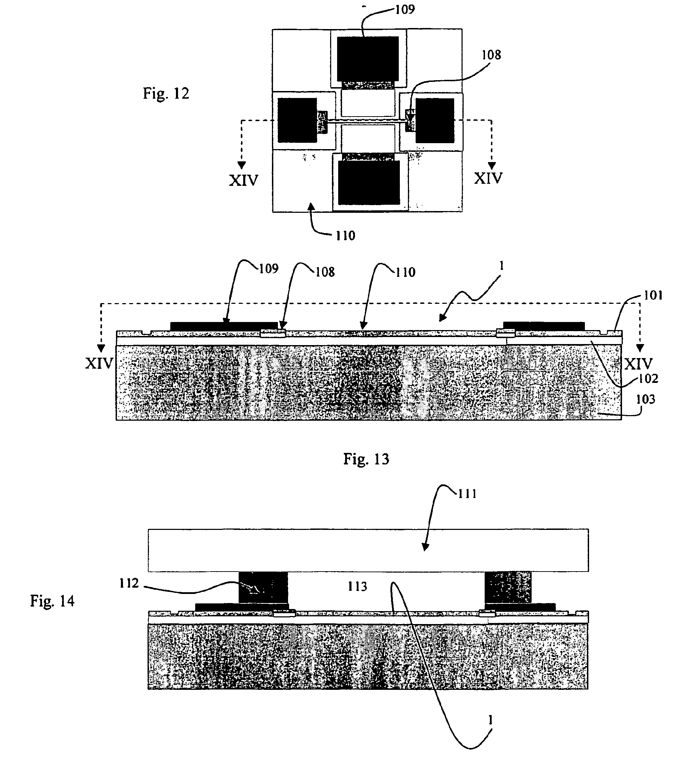

Dans un mode préféré de réalisation, on réalise ensuite un dépôt CVD, à basse température, d'un oxyde de silicium. L'ensemble oxyde « high-k » et oxyde de silicium est noté, sur les figures 12 et 13, par la référence 110.

Une étape de laminage de film photosensible, suivie d'une photolithographie permet de définir des ouvertures au-dessus des plots de contact électrique en AlSi (recouvert à ce stade d'une couche 110 d'isolant « high-k », et de $SiO_2$ PECVD). Une gravure sèche permet de retirer la couche isolante déposée en surface et dégager complètement l'AlSi à travers le masque de film photosensible. On obtient, alors, le dispositif représenté en vue de dessus à la figure 12, et en coupe à la figure 13 : l'ensemble du dispositif est recouvert d'une couche 110 d'isolant « high-k », et de $SiO_2$ PECVD, sauf les contacts en AlSi et les contacts ohmiques 108.

Enfin, dans un mode préféré de réalisation représenté en figure 14, on aligne et on assemble sur la face avant du substrat SOI ainsi structuré un capot 111 en verre ou Pyrex® éventuellement pré-structuré (capot transparent pour l'observation). Cet assemblage est réalisé par un procédé de sérigraphie de colle avec un polymère biocompatible 112. Ce polymère subit une photolithographie de manière à héberger des canaux 113 pour la circulation du fluide.

Pour permettre l'excitation du nanofil selon l'une de ses harmoniques, les électrodes d'excitation peuvent être disposées en série de part et d'autre du nanofil (figure 15) ou excitées avec un courant déphasé (figure 16).

Dans ces figures, le nombre et la position des électrodes sont tels que deux ventres (amplitude maximale) de vibrations de l'harmonique sont obtenus.

Plus particulièrement, le dispositif illustré en figure 15 comprend, sur un côté du nanofil 1, une électrode d'excitation 5a et une électrode de mesure 6a. De l'autre côté du nanofil 1, sont disposées une électrode de mesure 6b, en regard de l'électrode d'excitation 5a, et une électrode d'excitation 5b, en regard de l'électrode de mesure 6a.

Les branchements électriques aux générateurs G1, G2 et G3 sont similaires à ceux qui sont illustrés en figure 2.

Les lignes en tirets 7 représentent la vibration, dans son plan, du nanofil 1 selon son $2^{nd}$ mode en flexion.

Un montage alternatif est illustré en figure 16. Dans ce montage, les deux électrodes d'excitation 5a et 5b sont disposées du même côté du nanofil 1. De même, les deux électrodes de mesure 6a et 6b sont disposées du même côté du nanofil 1, en regard des électrodes d'excitation 5a et 5b.

Le dispositif comprend, en outre, deux déphaseurs 8 et 8', reliés, respectivement, au générateur G3 et à l'analyseur de spectre 9.

Les déphaseurs permettent de déphaser les courants électriques alimentant les électrodes d'excitation 5a et 5b de 180°.

Le déphasage entre les courants d'alimentation permet d'obtenir une vibration du nanofil 1 dans son plan, selon son $2^{nd}$ mode en flexion.

Les déphaseurs permettent de déphaser les courants passant par les électrodes de mesure 6a et 6b afin de récupérer un signal unique avec l'analyseur de spectre 9.

**Revendications**

1.  Micro-dispositif de détection *in situ* de particules d'intérêt dans un milieu fluide, **caractérisé en ce qu'**il comprend

    i) un nanofil (1), destiné à interagir avec les particules d'intérêt, présentant une longueur (L) et une largeur (Z), ledit nanofil étant suspendu entre deux ancrages (3 - 4) et présentant une fréquence de résonnance mécanique

($\omega_0$), les ancrages (3 - 4) définissent une source (3a) et un drain (4a), la source étant reliée à un premier générateur (G1) de tension alternative ($v_{LO}$) d'une première fréquence angulaire ($\omega_{LO}$), et le drain (4a) étant relié à un générateur (G2) de tension continue ($V_{SD}$), pour générer un premier signal d'entrée ;

ii) une première électrode (5), dite électrode d'excitation, disposée latéralement et en regard du nanofil (1), et reliée à un deuxième générateur (G3) de tension alternative ($v_{RF}$) d'une deuxième fréquence angulaire ($v_{RF}$), pour générer un deuxième signal d'entrée ; et

iii) une deuxième électrode (6), dite électrode de mesure, disposée latéralement et en regard du nanofil (1), à l'opposé de l'électrode d'excitation (5) par rapport au nanofil (1), et générant un signal de sortie, représentatif des particules d'intérêt.

2. Micro-dispositif de détection selon la revendication 1, dans lequel la longueur (L) du nanofil est comprise entre 0,5 $\mu$m et 10 $\mu$m, de préférence entre 2,38 $\mu$m et 4,25 $\mu$m.

3. Micro-dispositif de détection selon l'une des revendications 1 ou 2, dans lequel la largeur (Z) du nanofil est comprise entre 0,02 $\mu$m et 0,27 $\mu$m, de préférence comprise entre 0,15 $\mu$m et 0,27 $\mu$m.

4. Micro-dispositif de détection selon l'une des revendications 1 à 3, dans lequel le nanofil présente un rapport ($\alpha_{gm}$) longueur (L) sur largeur (Z) supérieur à 10, avantageusement compris entre 15 et 400.

5. Micro-dispositif de détection selon l'une des revendications 1 à 4, dans lequel le nanofil est recouvert, en partie ou en totalité, par des éléments de reconnaissance moléculaire complémentaires des particules d'intérêt à détecter.

6. Micro-dispositif de détection selon l'une des revendications 1 à 5, comprenant un amplificateur synchrone.

7. Micro-dispositif de détection selon l'une des revendications 1 à 6, dans lequel le nanofil (1) présente une épaisseur comprise entre 50 nm et 200 nm.

8. Micro-dispositif de détection selon l'une des revendications 1 à 7, dans lequel le nanofil (1) est recouvert d'une couche d'un matériau diélectrique isolant de permittivité comprise entre 2 et 20.

9. Procédé de mise en oeuvre du micro-dispositif selon l'une quelconque des revendications précédentes, comprenant les étapes suivantes :

- alimenter la source avec une première tension alternative ($v_{LO}$), dite tension de porteuse, ayant une première fréquence angulaire ($\omega_{LO}$), différente de la fréquence de résonnance mécanique ($\omega_0$) du nanofil ;
- alimenter le drain avec une tension continue ($V_{SD}$) ;
- alimenter l'électrode d'excitation, avec une deuxième tension alternative ($v_{RF}$), dite tension de commande, ayant une deuxième fréquence angulaire ($v_{RF}$), égale à la somme de la première fréquence angulaire ($\omega_{LO}$), et de la fréquence de résonnance mécanique ($\omega_0$) du nanofil ;
- déposer au moins une particule d'intérêt sur le nanofil ;
- détecter un courant ($I_{out}$) sortant par l'électrode de mesure.

10. Procédé de mise en oeuvre selon la revendication précédente, dans lequel l'alimentation en première tension alternative ($v_{LO}$) est réalisée avec un amplificateur synchrone.

11. Procédé de mise en oeuvre selon l'une quelconque des revendications 9 ou 10, comprenant une détection d'une composante fréquentielle du courant source-drain.

**Claims**

1. Microdevice for an *in situ* detection of particles of interest in a fluid medium, **characterized in that** it comprises:

i) a nanowire (1) intended for interacting with the particles of interest, having a length (L) and a width (Z), said nanowire being suspended between two anchors (3, 4) and having a mechanical resonance frequency ($\omega_0$), the anchors (3, 4) defining a source (3a) and a drain (4a), the source being connected to a first voltage generator (G1) generating an AC voltage ($v_{LO}$) with a first angular frequency ($\omega_{LO}$) and the drain (4a) being connected to a voltage generator (G2) for generating a DC voltage ($V_{SD}$), in order to generate a first input signal;

ii) a first electrode (5), called excitation electrode, placed laterally and facing the nanowire (1), said first electrode being connected to a second voltage generator (G3) for generating an AC voltage $(v_{VR})$ with a second angular frequency $(\omega_{RF})$, in order to generate a second input signal; and

iii) a second electrode (6), called measurement electrode, placed laterally and facing the nanowire (1), on the opposite side from the excitation electrode (5) relative to the nanowire (1) and generating an output signal representative of the particles of interest.

2. Detection microdevice according to Claim 1, in which the length (L) of the nanowire is between 0.5 $\mu$m and 10 $\mu$m, preferably between 2.38 $\mu$m and 4.25 $\mu$m.

3. Detection microdevice according to either of Claims 1 and 2, in which the width (Z) of the nanowire is between 0.02 $\mu$m and 0.27 $\mu$m, preferably between 0.15 $\mu$m and 0.27 $\mu$m.

4. Detection microdevice according to one of Claims 1 to 3, in which the nanowire has a length (L) to width (Z) ratio $(\alpha_{gm})$ of greater than 10, advantageously between 15 and 400.

5. Detection microdevice according to one of Claims 1 to 4, in which the nanowire is partly or completely covered with complementary elements for the molecular recognition of the particles of interest to be detected.

6. Detection microdevice according to one of Claims 1 to 5, including a synchronous amplifier.

7. Detection microdevice according to one of Claims 1 to 6, in which the nanowire (1) has a thickness of between 50 nm and 200 nm.

8. Detection microdevice according to one of Claims 1 to 7, in which the nanowire (1) is covered with a layer of an insulating dielectric having a permittivity of between 2 and 20.

9. Method of operating the microdevice according to any one of the preceding claims, comprising the following steps:

- the source is supplied with a first AC voltage $(v_{LO})$, called the carrier voltage, having a first angular frequency $(\omega_{LO})$ different from the mechanical resonance frequency $(\omega_0)$ of the nanowire;
- the drain is supplied with a DC voltage $(V_{SD})$;
- the excitation electrode is supplied with a second AC voltage $(v_{RF})$, called the control voltage, having a second angular frequency $(\omega_{RF})$ equal to the sum of the first angular frequency $(\omega_{LO})$ and the mechanical resonance frequency $(\omega_0)$ of the nanowire;
- at least one particle of interest is deposited on the nanowire; and
- a current $(I_{out})$ output by the measurement electrode is detected.

10. Operating method according to the preceding claim, in which the first AC voltage $(v_{LO})$ is supplied by a synchronous amplifier.

11. Method of operation according to either of Claims 9 and 10, comprising the detection of a frequency component of the source-drain current.

**Patentansprüche**

1. Mikrovorrichtung zur in situ Detektion von interessierenden Partikeln in einem Fluidmilieu, **dadurch gekennzeichnet, dass** sie umfasst:

i) einen Nanofaden (1), welcher dazu bestimmt ist, mit den interessierenden Partikeln zusammenzuwirken, und welcher eine Länge (L) und eine Breite (Z) aufweist, wobei der Nanofaden zwischen zwei Verankerungen (3-4) aufgehängt ist und eine mechanische Resonanzfrequenz $(\omega_0)$ aufweist, wobei die Verankerungen (3-4) eine Source (3a) und einen Drain (4a) definieren, wobei die Source mit einem ersten Generator (G1) für Wechselspannung $(v_{LO})$ einer ersten Winkelfrequenz $(\omega_{LO})$ verbunden ist und der Drain (4a) mit einem Generator (G2) für Gleichspannung $(V_{SD})$ verbunden ist, um ein erstes Eingangssignal zu erzeugen,

ii) eine erste Elektrode (5), als Anregungselektrode bezeichnet, welche bezüglich des Nanofadens (1) lateral angeordnet ist und mit einem zweiten Generator (G3) für Wechselspannung $(v_{RF})$ einer zweiten Winkelfrequenz

($\omega_{RF}$) verbunden ist, um ein zweites Eingangssignal zu erzeugen, und

iii) eine zweite Elektrode (6), als Messelektrode bezeichnet, welche bezüglich des Nanofadens (1) lateral und bezüglich des Nanofadens (1) gegenüberliegend der Anregungselektrode (5) angeordnet ist und ein Ausgangssignal erzeugt, welches interessierende Partikel repräsentiert.

2. Mikrovorrichtung zur Detektion gemäß Anspruch 1, bei welcher die Länge (L) des Nanofadens zwischen 0,5 $\mu$m und 10 $\mu$m, bevorzugt zwischen 2,38 $\mu$m und 4,25 $\mu$m, enthalten ist.

3. Mikrovorrichtung zur Detektion gemäß einem der Ansprüche 1 oder 2, bei welcher die Breite (Z) des Nanofadens zwischen 0,02 $\mu$m und 0,27 $\mu$m, bevorzugt zwischen 0,15 $\mu$m und 0,27 $\mu$m enthalten ist.

4. Mikrovorrichtung zur Detektion gemäß einem der Ansprüche 1-3, bei welcher der Nanofaden ein Verhältnis ($\alpha_{gm}$) Länge (L) zu Breite (Z) größer als 10, vorteilhafterweise zwischen 15 und 400 enthalten, aufweist.

5. Mikrovorrichtung zur Detektion gemäß einem der Ansprüche 1-4, bei welcher der Nanofaden teilweise oder ganz durch molekulare Erkennungselemente komplementär zu den zu detektierenden interessierenden Partikeln bedeckt ist.

6. Mikrovorrichtung zur Detektion gemäß einem der Ansprüche 1-5, umfassend einen Synchronverstärker.

7. Mikrovorrichtung zur Detektion gemäß einem der Ansprüche 1-6, bei welcher der Nanofaden (1) eine Dicke enthalten zwischen 50 nm und 200 nm aufweist.

8. Mikrovorrichtung zur Detektion gemäß einem der Ansprüche 1-7, bei welcher der Nanofaden (1) mit einer Schicht eines isolierenden dielektrischen Materials mit einer zwischen 2 und 20 enthaltenen Permittivität bedeckt ist.

9. Verfahren zum Betreiben der Mikrovorrichtung gemäß einem der vorhergehenden Ansprüche, umfassend folgende Schritte:

   - Versorgen der Source mit einer ersten Wechselspannung ($\nu_{LO}$), genannt Trägerspannung, welche eine erste Winkelfrequenz ($\omega_{LO}$) aufweist, welche sich von der mechanischen Resonanzfrequenz ($\omega_0$) des Nanofadens unterscheidet,
   - Versorgen des Drains mit einer Gleichspannung ($V_{SD}$),
   - Versorgen der Anregungselektrode mit einer zweiten Wechselspannung ($\nu_{RF}$), genannt Steuerspannung, welche eine zweite Winkelfrequenz ($\omega_{RF}$) gleich der Summe der ersten Winkelfrequenz ($\omega_{LO}$) und der mechanischen Resonanzfrequenz ($\omega_0$) des Nanofadens aufweist,
   - Ablagern mindestens eines interessierenden Partikels auf dem Nanofaden,
   - Detektieren eines von der Messelektrode ausgehenden Stroms ($I_{out}$).

10. Verfahren zum Betreiben gemäß dem vorhergehenden Anspruch, bei welchem die Versorgung mit der ersten Wechselspannung ($\nu_{LO}$) mit einem Synchronverstärker realisiert wird.

11. Verfahren zum Betreiben gemäß einem der Ansprüche 9 oder 10, umfassend eine Detektion einer Frequenzkomponente des Source-Drain-Stroms.

Fig. 1

Fig. 2

Fig. 3

Fig. 4

Fig. 5

Fig. 6

Fig. 7

Fig. 8

Fig. 9

Fig. 10

Fig. 11

Fig. 12

109

108

XIV

110

XIV

Fig. 13

109    108    110    1

101

XIV

XIV

102

103

Fig. 14

111

112

113

1

Fig. 15

Fig. 16

**EP 2 233 919 B1**

RÉFÉRENCES CITÉES DANS LA DESCRIPTION

**Documents brevets cités dans la description**

- US 2003033876 A